# EUROPÄISCHE PATENTSCHRIFT

(11) **EP 2 499 363 B1**
(45) Veröffentlichungstag und Bekanntmachung des Hinweises auf die Patenterteilung: **11.12.2013**
(21) Anmeldenummer: 10794857.2
(22) Anmeldetag: 20.10.2010
(51) Int. Cl.: F03D 11/02, F03D 7/02, F03D 9/00, F03D 1/02

(54) **WINDKRAFTANLAGE**
WIND TURBINE
ÉOLIENNE

(30) Priorität: 11.11.2009 DE 102009052493
(43) Veröffentlichungstag der Anmeldung: 19.09.2012
(73) Patentinhaber: Uni Wind GmbH, 39288 Burg (DE)
(72) Erfinder: KRÖGER, Uwe, 26520 Osteel (DE)
(74) Vertreter: Fischer, Volker
(86) Internationale Anmeldenummer: PCT/DE2010/001242
(87) Internationale Veröffentlichungsnummer: WO 2011/057598

(56) Entgegenhaltungen:
- EP-A1- 0 120 654
- US-A- 4 556 801
- US-A1- 2007 166 147

## Beschreibung

Die Erfindung betrifft eine Windkraftanlage mit wenigstens einem Windrad, und einer elektrischen Stromerzeugereinrichtung.

Bei bekannten Windkraftanlagen erfolgt die Windnachführung über Stellmotore, mit denen der gesamte Gondelkopf der Windkraftanlage über ein so genanntes Azimutlager um eine Vertikalachse gedreht wird. Die Drehzahlregelung erfolgt vorzugsweise über Stellmotore, mit denen die Blattanstellwinkel des Windrades verstellt werden. Sämtliche Stellmotore erhalten ihre Steuersignale aus einer Steuerungseinrichtung, die über Windmesseinrichtungen verfügt, die auf dem Gondelkopf angeordnet sind. Die freie Anordnung auf dem Gondelkopf hat jedoch den Nachteil, dass die Windmesseinrichtungen fortwährend Witterungseinflüssen ausgesetzt sind. Insbesondere durch Eisbildung und Korrosion bedingte Störgrößen können dazu führen, dass die Windmesseinrichtungen nicht mehr oder nur noch eingeschränkt arbeiten können. Zudem sind die Windmesseinrichtungen Störgrößen ausgesetzt, die beispielsweise von unsteten Windverhältnissen verursacht sind. Zum Ausregeln dieser Störgrößen sowie zum Ansteuern der Stellmotore bedarf es aufwendiger Steuer- und Regelkreise. Insbesondere bei der Umsetzung kleinerer Windkraftanlagen mit einer Leistung bis 30 Kilowatt stellt maßgeblich die aufwendige Steuerungs- und Regelungstechnik ein deutliches Investitionsrisiko dar.

Der Erfindung liegt deshalb die Aufgabe zugrunde, eine Windkraftanlage der eingangs genannten Gattung aufzuzeigen, deren Windnachführung und Drehzahlregelung maßgeblich vereinfacht sind.

Diese Aufgabe ist erfindungsgemäß durch die Merkmale des Patentanspruches 1 gelöst. Vorteilhafte Weiterbildungen der Erfindung sind in den Unteransprüchen angegeben.

Eine beispielhafte Windkraftanlage aus dem Stand der Technik, die den Oberbegriff von Anspruch 1 offenbart, ist in US 2007/0166147 A1 beschrieben.

Die erfindungsgemäße Windkraftanlage zeichnet sich dadurch aus, dass die Stromerzeugungseinrichtung wenigstens zwei Generatoren aufweist, dass die Generatoren über wenigstens ein Differentialgetriebe miteinander gekoppelt sind, dass die Läufer der Generatoren jeweils mit einem Achsrad des Differentialgetriebes verbunden sind, dass das Windrad an einem Ausgleichsrad des Differentialgetriebes angeordnet ist, und dass die Statoren der Generatoren zu einem Widerlager miteinander verbunden sind, an dem der Differentialträger des Differentialgetriebes drehbeweglich aufgenommen ist.

Wie jedes Differentialgetriebe weist auch das Differentialgetriebe der erfindungsgemäßen Windkraftanlage einen Differentialträger auf, mit dem jedes Ausgleichsrad mit beiden Achsrädern in einer Eingriffstellung gehalten ist. Neben seiner eigentlichen Aufgabe, ein Drehmoment hälftig auf die Achsräder aufzuteilen, übernimmt das Ausgleichsrad für das Differentialgetriebe der erfindungsgemäßen Windkraftanlage zusätzlich die Funktion eines mit dem Windrad verbundenen Antriebsrades. Folglich werden die den Achsrädern zugeordneten Generatoren mit einander entgegengesetzten Drehrichtungen angetrieben. Bezogen auf das Achsdifferential eines Kraftfahrzeuges entsprechen die Läufer der Generatoren den Achswellen einer Antriebsachse. Der Differentialträger, der bei Achsdifferentialen von Kraftfahrzeugen von der Abtriebswelle eines Getriebes angetrieben wird, übernimmt bei der erfindungsgemäßen Windkraftanlage die Ausgleichsfunktion des bei Achsdifferentialen eingesetzten Ausgleichsrades. Während mit den bei Kraftfahrzeugen eingesetzten Achsdifferentialen durch Kurvenfahrt an den Achswellen einer Antriebswelle auftretende Drehzahlunterschiede vom Ausgleichsrad ausgeglichen werden, sind bei dem Differentialgetriebe der erfindungsgemäßen Windkraftanlage an den Achsrädern auftretende Drehmomentunterschiede vom Differentialträger auszugleichen. Dabei sind Drehmomentunterschiede entweder die Folge einer Schräganströmung des Windrades bei einem Windrichtungswechsel oder aber die unterschiedlichen Drehmomente sind die Folge eines ungleichen Widerstandes an den gegenläufig drehenden Generatoren der Stromerzeugereinrichtung. Ein zur drehbeweglichen Aufnahme des Differentialträgers am Widerlager benötigtes Drehlager ist mit Vorteil deutlich kleiner und kostengünstiger ausführbar als ein Azimutlager einer bekannten Windkraftanlage mit vergleichbarer Leistung.

Nach einer ersten Weiterbildung der Erfindung sind die Generatoren zu Ringgeneratoren ausgebildet, deren von den Statoren ausgebildetes Widerlager wenigstens einen als Leitungsträger fungierenden Hohlschaft aufweist. Mit dem Hohlschaft ist vorteilhaft eine Zuwegung für eine elektrische Kopplung der gegenläufig drehenden Generatoren geschaffen.

Nach einer nächsten Weiterbildung der Erfindung weist jeder Generator eine etwa rechtwinklig zur Drehachse des Windrades ausgerichtete Drehachse auf. Dazu ist das Differentialgetriebe mit Vorteil als Kegelrad-Differentialgetriebe ausgebildet. Es liegt jedoch durchaus im Rahmen der Erfindung, die Drehachsen der Generatoren und des Windrades parallel zueinander anzuordnen. Dazu ist das Differentialgetriebe mit Vorteil als Stirnrad-Differentialgetriebe ausgebildet.

Nach einer besonders vorteilhaften Weiterbildung der Erfindung sind die Generatoren über wenigstens einen Stromabnahmeregler miteinander verbunden. Mit dem Stromabnahmeregler können an den Generatoren unterschiedliche Widerstände induktiv eingestellt werden, so dass der sich daraufhin einstellende Drehmomentunterschied vom Differentialträger durch eine selbsttätige Drehbewegung an seinem Widerlager ausgeglichen wird und das Windrad um einen vorbestimmten Winkel aus dem Wind herausdreht. Auf diese Weise ist eine kostengünstige und gleichwohl wirksame Drehzahlregelung ausgebildet. Auf teure Stellmotore sowie aufwendige Steuer- und Regelkreise kann vorteilhaft verzichtet werden.

Zur Ausbildung einer mechanisch einfachen und kostengünstigen Windnachführung ist vorgesehen, das Windrad als Lee-Läufer auszubilden, so dass sich das Windrad selbsttätig im Wind ausrichtet. Auf teure Stellmotore sowie aufwendige Steuer- und Regelkreise kann hier ebenfalls verzichtet werden. Selbstverständlich ist es ebenso denkbar, das Windrad als Luv-Läufer mit einer am Differentialträger angeordneten Windfahne auszubilden, die den Luv-Läufer auf vergleichbar einfache Weise im Wind hält. Auch die zusätzliche Anordnung eines dem Lee-Läufer gegenüberstehenden Luv-Läufers sowie die Ausbildung eines Differentialgetriebes mit mehreren Ausgleichsrädern liegen im Rahmen dieser Erfindung.

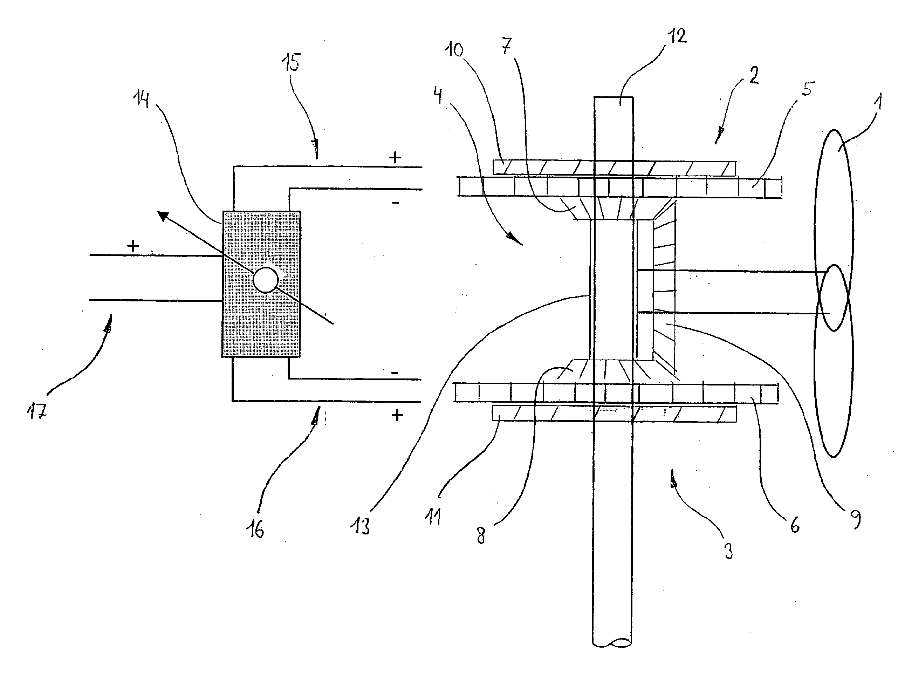

Ein Ausführungsbeispiel der Erfindung, aus dem sich weitere erfinderische Merkmale ergeben, ist in der Zeichnung dargestellt.

Die Figur zeigt eine schematische Darstellung der erfindungsgemäßen Windkraftanlage mit einem Windrad 1 und zwei als Ringgeneratoren ausgebildeten Generatoren 2, 3, die über ein Differentialgetriebe 4 mechanisch miteinander gekoppelt sind. Die gegenläufig drehenden Läufer 5, 6 der Generatoren 2, 3 sind jeweils mit einem Achsrad 7, 8 des Differentialgetriebes 4 verbunden, wobei das Windrad 1 an einem Ausgleichsrad 9 des Differentialgetriebes 4 angeordnet ist. Die Statoren 10, 11 der Generatoren 2, 3 sind über einen Hohlschaft 12 zu einem Widerlager miteinander verbunden, an welchem der Differentialträger 13 des Differentialgetriebes 4 drehbeweglich aufgenommen ist. Jeder Generator 2, 3 weist eine rechtwinklig zur Drehachse des als Lee-Läufer ausgebildeten Windrades 1 ausgerichtete Drehachse auf. Die Generatoren 2, 3 sind über einen Stromabnahmeregler 14 elektrisch miteinander verbunden. Für diese Verbindung sind elektrische Generatoranschlussleitungen 15, 16 durch den als Leitungsträger fungierenden Hohlschaft 12 hindurchgeführt (nicht dargestellt). Außerdem weist der Stromabnahmeregler 14 Netzanschlussleitungen 17 zur Abgabe des von den Generatoren 2, 3 gelieferten elektrischen Stromes an ein Versorgungsnetz auf.

## Patentansprüche

1. Windkraftanlage mit wenigstens einem Windrad und einer Stromerzeugereinrichtung,
wobei die Stromerzeugereinrichtung wenigstens zwei Generatoren (2, 3) aufweist,
**dadurch gekennzeichnet,**
**dass** die Generatoren (2, 3) über wenigstens ein Differentialgetriebe (4) miteinander gekoppelt sind,
**dass** die Läufer (5, 6) der Generatoren (2, 3) jeweils mit einem Achsrad (7, 8) des Differentialgetriebes (4) verbunden sind,
**dass** das Windrad (1) an einem Ausgleichsrad (9) des Differentialgetriebes (4) angeordnet ist, und
**dass** die Statoren (10, 11) der Generatoren (2, 3) zu einem Widerlager miteinander verbunden sind, an dem der Differentialträger (13) des Differentialgetriebes (4) drehbeweglich aufgenommen ist.

2. Windkraftanlage nach Anspruch 1, **dadurch gekennzeichnet, dass** die Generatoren (2, 3) zu Ringgeneratoren ausgebildet sind, deren von den Statoren (10, 11) ausgebildetes Widerlager wenigstens einen als Leitungsträger fungierenden Hohlschaft (12) aufweist.

3. Windkraftanlage nach Anspruch 1 oder 2, **dadurch gekennzeichnet, dass** jeder Generator (2, 3) eine etwa rechtwinklig zur Drehachse des Windrades (1) ausgerichtete Drehachse aufweist.

4. Windkraftanlage nach einem der Ansprüche 1 bis 3, **dadurch gekennzeichnet, dass** die Generatoren (2, 3) über wenigstens einen Stromabnahmeregler (14) miteinander verbunden sind.

5. Windkraftanlage nach einem der Ansprüche 1 bis 4, **dadurch gekennzeichnet, dass** das Windrad (1) als Lee-Läufer ausgebildet ist.

## Claims

1. Wind power plant having at least one wind wheel and a power generating means,
wherein the power generating means features at least two generators (2, 3), **characterized in that** the generators (2, 3) are coupled to each other via at least one differential gear (4),
the rotors (5, 6) of the generators (2, 3) are each connected to an axle wheel (7, 8) of the differential gear (4),
the wind wheel (1) is arranged at a compensating wheel (9) of the differential gear (4), and
the stators (10, 11) of the generators (2, 3) are interconnected to form a brace on which the differential carrier (13) of the differential gear (4) is rotatably accommodated.

2. Wind power plant according to claim 1, **characterized in that** the generators (2, 3) are designed as ring generators, the brace thereof which is formed by the stators (10, 11) features at least one hollow shaft (12) which acts as a circuit carrier.

3. Wind power plant according to claim 1 or 2, **characterized in that** each generator (2, 3) has a rotational axis which is oriented approximately at a right angle to the rotational axis of the wind wheel (1).

4. Wind power plant according to any of claims 1 to 3, **characterized in that** the generators (2, 3) are interconnected via at least one current decrease control (14).

5. Wind power plant according to any of claims 1 to 4, **characterized in that** the wind wheel (1) is designed as a downwind turbine.

## Revendications

1. Centrale éolienne comprenant au moins une roue éolienne et un moyen générateur de courant,
dans laquel le moyen générateur de courant présente au moins deux générateurs (2, 3), **caractérisée en ce que**
lesdits générateurs (2, 3) sont couplés l'un à l'autre par l'intermédiaire d'au moins une transmission différentielle (4),
les rotors (5, 6) dudits générateurs (2, 3) étant chacun relié à une roue axiale (7, 8) de la transmission différentielle (4),
la roue éolienne (1) étant agencée à une roue de compensation (9) de la transmission différentielle (4), et
les stators (10, 11) dudits générateurs (2, 3) étant interconnectés de façon à former une butée (4) sur laquelle est logé en rotation le support du différentiel (13) de la transmission différentielle (4).

2. Centrale éolienne selon la revendication 1, **caractérisée en ce que** les générateurs (2, 3) sont conçus en tant que générateurs annulaires, la butée de ceux-ci qui est formée par les stators (10, 11) présente au moins un arbre creux (12) agissant comme un porte-circuit.

3. Centrale éolienne selon la revendication 1 ou 2, caracérisée en ce que chaque générateur (2, 3) présente un axe de rotation (1) qui est orienté approximativement à angle droit par rapport à l'axe de rotation de la roue éolienne (1).

4. Centrale éolienne selon l'une quelconque des revendications 1 à 3, caracérisée en ce que les générateurs (2, 3) sont reliés les uns aux autres par l'intermédiare d'au moins une commande de décroissance du courant (14).

5. Centrale éolienne selon l'une quelconque des revendications 1 à 4, **caractérisée en ce que** la roue éolienne (1) est conçue en tant qu'une éolienne sous le vent.
